# EUROPÄISCHE PATENTSCHRIFT

(11) **EP 2 153 097 B1**
(45) Veröffentlichungstag und Bekanntmachung des Hinweises auf die Patenterteilung: **14.07.2010**
(21) Anmeldenummer: 08716916.5
(22) Anmeldetag: 19.02.2008
(51) Int. Cl.: F16K 27/02, F16K 31/06

(54) **VENTILBAUGRUPPE**
VALVE ASSEMBLY
ENSEMBLE SOUPAPE

(30) Priorität: 10.03.2007 DE 102007011767; 17.01.2008 DE 102008004780
(43) Veröffentlichungstag der Anmeldung: 17.02.2010
(73) Patentinhaber: Continental Teves AG & Co. oHG, 60488 Frankfurt (DE)
(72) Erfinder: VOSS, Christoph, 60435 Frankfurt am Main (DE)
(86) Internationale Anmeldenummer: PCT/EP2008/051956
(87) Internationale Veröffentlichungsnummer: WO 2008/110435

(56) Entgegenhaltungen:
- DE-A1- 19 700 980
- DE-A1-102005 049 122

## Beschreibung

Die Erfindung betrifft eine Ventilbaugruppe nach dem Oberbegriff des Patentanspruchs 1.

Aus DE 102005049122 A1 ist bereits eine derartige Ventilbaugruppe bekannt, die eine konventionelle Ausbildung eines Querkanals im Ventilgehäuse aufweist, wonach der Querkanal als Querbohrung erst nach Herstellung des Ventilgehäuses durch Bohren oder Stanzen und damit durch separate Herstellschritte und aufwendige Nachbearbeitung am Ventilgehäuse eingebracht werden kann.

Daher ist es die Aufgabe der vorliegenden Erfindung, eine Ventilbaugruppe der angegebenen Art derart zu verbessern, dass durch geeignete Gestaltung der Querbohrung auf ein aufwendiges Herstellverfahren verzichtet werden kann.

Diese Aufgabe wird erfindungsgemäß für eine Ventilbaugruppe der angegebenen Art mit den kennzeichnenden Merkmalen des Patentanspruchs 1 gelöst.

Weitere Merkmale und Vorteile der Erfindung gehen im Folgenden aus der Beschreibung mehrerer Ausführungsbeispiele anhand zweier Zeichnungen hervor.

Es zeigen:
- Figur 1: einen Längsschnitt durch eine Ventilbaugruppe,
- Figur 2: eine Perspektivansicht auf die erfindungsgemäße Gestaltung des aus der linken Bildhälfte von Figur 1 ersichtlichen Ventilgehäuse.

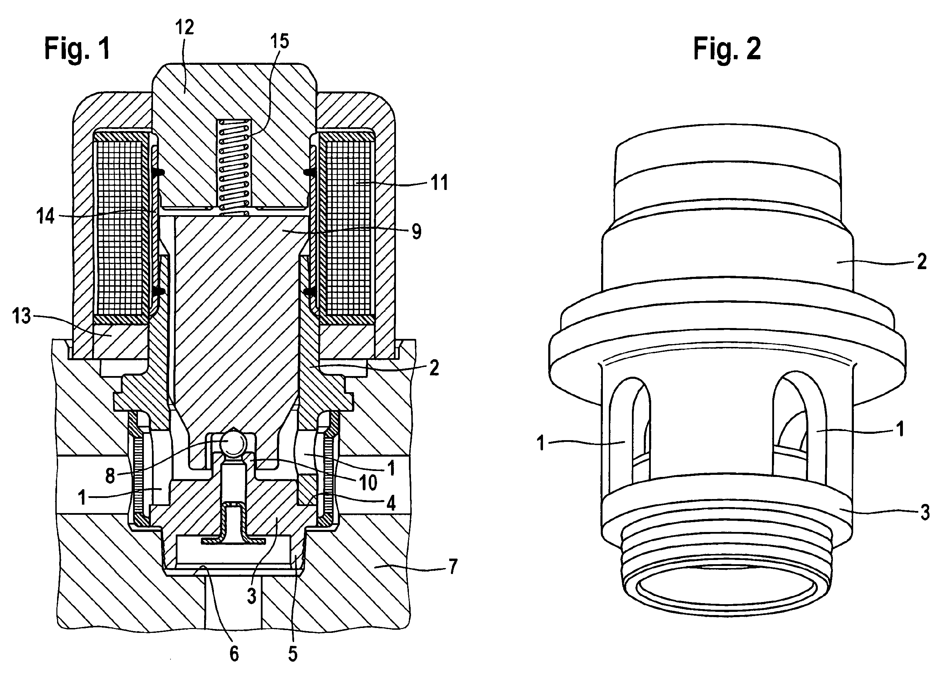

Die Figur 1 offenbart im Längsschnitt eine Ventilbaugruppe, welche wenigstens einen Querkanal 1 in einem im Wesentlichen rohrförmig gestalteten Ventilgehäuse 2 aufweist, mit einem axial beweglich im Ventilgehäuse 2 angeordneten Ventilschließglied 8, das auf einen Ventilsitz gerichtet ist, der an einem im Ventilgehäuse 2 befestigten, hohlzylinderförmigen Ventilsitzkörper 3 angeordnet ist, welcher an einem unteren Ende des Ventilgehäuses 2 angebracht ist.

Zur rechten der Ventilsymmetrieachse ist aus Figur 1 der bisherige Stand der Technik zur konventionellen Ausbildung eines Querkanals 1 ersichtlich, wonach der Querkanal 1 als Querbohrung erst nach Herstellung des Ventilgehäuses durch Bohren oder Stanzen und damit durch mehrere Herstellschritte und aufwendige Nachbearbeitung am Ventilgehäuse 2 eingebracht werden kann.

Zur linken der Ventilsymmetrieachse ist aus Figur 1 nunmehr erfindungsgemäß der Querkanal 1 durch einen Längsschlitz gebildet, der sich beginnend vom unteren Ende des Ventilgehäuses 2 in dessen Längsrichtung abschnittsweise in den Mantel das Ventilgehäuse 2 erstreckt. Der Querkanal 1 ist nunmehr durch die erfindungsgemäße Ausbildung vorteilhaft in einem einzigen Arbeitsgang bereits während der Formgebung des Ventilgehäuses 2 herstellbar, sodass das aus dem Stand der Technik bekannte aufwendige Bohren oder Stanzen des Querkanals 1 entfällt. Das Ventilgehäuse 2 ist in Verbindung mit dem erfindungsgemäßen Querkanal 1 fertigungstechnisch besonders einfach durch einen Kaltumformungsprozess automatengerecht herstellbar, ohne weitere Nacharbeiten vornehmen zu müssen.

Wie aus der linken Hälfte der Figur 1 hervorgeht, ist der als Längsschlitz ausgebildete Querkanal 1 von dem am Ende des Ventilgehäuses 2 angebrachten Ventilsitzkörper 3 teilweise verdeckt, wozu der Ventilsitzkörper 3 abschnittsweise am unteren Ende des rohrförmigen Ventilgehäuses 2 eingepresst ist. Zur Begrenzung der Einpresstiefe weist der Ventilsitzkörper 3 einen Axialanschlag 4 auf, der sich am unteren Ende des die Querbohrung 1 begrenzenden Wandabschnitts am Ventilgehäuse 2 abstützt. Weiterhin weist der Ventilsitzkörper 3 auf der vom Ventilgehäuse 2 abgewandten Seite einen Vorsprung 5 auf, der mittels einer Presspassung in einer Ventilaufnahmebohrung 6 flüssigkeitsdicht befestigt ist. Der kreisrunde Vorsprung 5 weist zur Maximierung der Dicht- und Befestigungswirkung am Außenumfang mehrerer Rillen oder eine Tannenzapfen- bzw. Sägezahnkontur auf.

Hingegen ist das Ventilgehäuse 2 mittels einer Außenverstemmung des die Ventilaufnahmebohrung 6 begrenzenden Gehäusematerials unter Axialkraftwirkung in Richtung des Ventilsitzkörpers 3 in einem Ventilaufnahmekörper 7 sicher fixiert.

Die Figur 2 zeigt ergänzend zu den bisherigen Erläuterungen eine Perspektivansicht der erfindungswesentlichen Merkmale, aus der besonders gut die Gestaltung des Ventilgehäuses 2 mit den darin integrierten Querkanälen 1 hervorgeht, die durch den von unten in das Ventilgehäuse 2 eingepressten Ventilsitzkörper 3 geringfügig verdeckt sind. Aus Figur 2 geht deutlich hervor, dass mehrere Querkanäle 1 gleichmäßig über dem Umfang des Ventilgehäuses 2 verteilt sind, wodurch das Ende des Ventilgehäuses 2 infolge der als Längsschlitze ausgebildeten Querkanäle 1 eine Kronenkontur aufweist. Die durch eine Kaltumformung während der Herstellung des Ventilgehäuses 2 gleichzeitig hergestellten Längsschlitze sind in ihrem geschlossenen Endbereich bogenförmig ausgerundet, sodass hierdurch mechanische Spannungsspitzen vermieden werden sowie eine widerstandsarme Durchströmung der Querkanäle 1 gewährleistet ist.

Die vorgestellte Erfindung ist entsprechend der gewählten Darstellung nach Figur 1 beispielhaft an einem Elektromagnetventil verdeutlicht, wozu oberhalb des Ventilsitzes das kugelförmige Ventilschließglied 8 innerhalb einer Sackbohrung eines Magnetankers 9 positioniert ist. Der Magnetanker 9 ist sowohl im oberen Ankerbereich innerhalb des zweiteilig gestalteten Ventilgehäuses 2 als auch im unteren Ankerbereich auf einem sich in die Sackbohrung erstreckenden rohrförmigen Fortsatz 10 des Ventilsitzkörpers 3 präzise geführt. Zur elektromagnetischen Betätigung des Magnetankers 9 ist eine Elektrospule 11 über das Ventilgehäuse 2 gestülpt, deren Jochteil einerseits einen das Ventilgehäuse 2 verschließenden Magnetkern 12, andererseits über eine Magnetscheibe 13 den magnetisierbaren Rohrteil des Ventilgehäuses 2 kontaktiert. Zur Vermeidung eines Magnetkreiskurzschlusses ist das zwischen dem magnetisierbaren Rohrteil des Ventilgehäuses 2 und dem Magnetkern 12 angeordnete weitere Rohrteil 14 des Ventilgehauses 2 aus einem nicht magnetisierbaren Werkstoff.

Die in Figur 1 abgebildete Ventilbaugruppe ist als in Grundstellung geschlossenes 2/2-Wegeventil ausgeführt, wozu zwischen dem Magnetkern 12 und dem Magnetanker 9 eine Druckfeder 15 eingespannt ist.

Die Erfindung ist nicht auf das in Figur 1 vorgestellte Elektromagnetventil beschränkt, sondern vielmehr unabhängig von der jeweils zu realisierenden Ventilbaugruppe universell einsetzbar.

### Bezugszeichenliste

- 1: Querkanal
- 2: Ventilgehäuse
- 3: Ventilsitzkörper
- 4: Axialanschlag
- 5: Vorsprung
- 6: Ventilaufnahmebohrung
- 7: Ventilaufnahmekörper
- 8: Ventilschließglied
- 9: Magnetanker
- 10: Fortsatz
- 11: Elektrospule
- 12: Magnetkern
- 13: Magnetscheibe
- 14: Rohrkörper
- 15: Druckfeder

## Patentansprüche

1. Ventilbaugruppe, welche wenigstens einen Querkanal (1) in einem im Wesentlichen rohrförmig gestalteten Ventilgehäuse (2) äufweist, mit einem beweglich im Ventilgehäuse angeordneten Ventilschließglied (8), das auf einen Ventilsitz gerichtet ist, der an einem mit dem Ventilgehäuse verbundenen, hohlzylinderförmigen Ventilsitzkörper (3) angeordnet ist, welcher an einem Ende des Ventilgehäuses angebracht ist, **dadurch gekennzeichnet, dass** der Querkanal (1) durch einen Längsschlitz gebildet ist, der sich beginnend vom Ende des Ventilgehäuses (2) in dessen Längsrichtung abschnittsweise in das Ventilgehäuse (2) erstreckt.

2. Ventilbaugruppe nach Anspruch 1, **dadurch gekennzeichnet, dass** der Querkanal (1) in einem einzigen Arbeitsgang in Verbindung mit der Formgebung des Ventilgehäuses (2) hergestellt ist.

3. Ventilbaugruppe nach Anspruch 1 oder 2, **dadurch gekennzeichnet, dass** der Querkanal (1) und das Ventilgehäuse (2) durch einen Kaltumformungsprozess hergestellt sind.

4. Ventilbaugruppe nach einem der vorangegangenen Ansprüche, **dadurch gekennzeichnet, dass** mehrere Querkanäle (1) gleichmäßig über dem Umfang am Ende des Ventilgehäuses (2) verteilt sind, wodurch das Ende des Ventilgehäuses (2) infolge der als Längsschlitze ausgebildeten Querkanäle (1) eine Kronenkontur aufweist.

5. Ventilbaugruppe nach einem der vorangegangenen Ansprüche, **dadurch gekennzeichnet, dass** der Querkanal (1) von dem am Ende des Ventilgehäuses (2) flüssigkeitsdicht angebrachten Ventilsitzkörper (3) unmittelbar begrenzt ist.

6. Ventilbaugruppe nach Anspruch 5, **dadurch gekennzeichnet, dass** der Ventilsitzkörper (3) abschnittsweise am Ende des rohrförmigen Ventilgehäuses (2) ein- oder aufgepresst ist.

7. Ventilbaugruppe nach Anspruch 6, **dadurch gekennzeichnet, dass** der Ventilsitzkörper (3) zur Begrenzung der Ein- oder Aufpresstiefe am Ventilgehäuse (2) einen Axialanschlag (4) aufweist, der sich an den die Querbohrung(en) (1) begrenzenden Wandabschnitt des Ventilgehäuses (2) abstützt.

8. Ventilbaugruppe nach einem der vorangegangenen Ansprüche, **dadurch gekennzeichnet, dass** der Ventilsitzkörper (3) auf der vom Ventilgehäuse (2) abgewandten Seite einen Vorsprung (5) aufweist, der mittels einer Presspassung in einer Ventilaufnahmebohrung (6) flüssigkeitsdicht befestigbar ist.

9. Ventilbaugruppe nach Anspruch 8, **dadurch gekennzeichnet, dass** der kreisrunde Vorsprung (5) zur Maximierung der Dicht- und Befestigungswirkung am Außenumfang mehrerer Rillen oder eine Tannenzapfenkontur aufweist.

10. Ventilbaugruppe nach einem der vorangegangenen Ansprüche, **dadurch gekennzeichnet, dass** das Ventilgehäuse (2) mittels einer Außenverstemmung des die Ventilaufnahmebohrung (6) begrenzenden Gehäusematerials unter Axialkraftwirkung in Richtung des Ventilsitzkörpers (3) in einem Ventilaufnahmekörper (7) fixierbar ist.

## Claims

1. Valve assembly which has at least one transverse channel (1) in a substantially tubular valve housing (2), with a valve-closing member (8) arranged movably in the valve housing and directed towards a valve seat which is arranged on a hollow-cylindrical valve seat body (3) connected to the valve housing and mounted on one end of the valve housing, **characterized in that** the transverse channel (1) is formed by a longitudinal slot which, starting from the end of the valve housing (2), extends into the valve housing (2) over a section thereof in its longitudinal direction.

2. Valve assembly according to Claim 1, **characterized in that** the transverse channel (1) is produced in combination with the shaping of the valve housing (2) in a single work cycle.

3. Valve assembly according to Claim 1 or 2, **characterized in that** the transverse channel (1) and the valve housing (2) are produced by a cold-forming process.

4. Valve assembly according to any one of the preceding claims, **characterized in that** a plurality of transverse channels (1) are distributed uniformly around the circumference at the end of the valve housing (2), whereby the end of the valve housing (2) has a crown-shaped contour as a result of the transverse channels (1) configured as longitudinal slots.

5. Valve assembly according to any one of the preceding claims, **characterized in that** the transverse channel (1) is directly delimited by the valve seat body (3) mounted in a liquid-tight manner on the end of the valve housing (2).

6. Valve assembly according to Claim 5, **characterized in that** the valve seat body (3) is pressed into or onto the end of the tubular valve housing (2) over a section thereof.

7. Valve assembly according to Claim 6, **characterized in that** the valve seat body (3), in order to limit the depth to which it is pressed into or onto the valve housing (2), has an axial stop (4) which bears against the wall section of the valve housing (2) which delimits the transverse bore(s) (1).

8. Valve assembly according to any one of the preceding claims, **characterized in that** the valve seat body (3) has on the side oriented away from the valve housing (2) a projection (5) which can be fixed in a liquid-tight manner in a valve-receiving bore (6) by means of a press fit.

9. Valve assembly according to Claim 8, **characterized in that** the circular projection (5) has on its outer periphery a plurality of grooves or a fircone contour in order to maximize the sealing and fixing effect.

10. Valve assembly according to any one of the preceding claims, **characterized in that** the valve housing (2) can be fixed in a valve-receiving body (7) by means of external caulking of the housing material adjacent to the valve-receiving bore (6) by the exertion of axial force in the direction of the valve seat body (3).

## Revendications

1. Ensemble de soupape, qui présente au moins un canal transversal (1) dans un corps de soupape (2) de forme essentiellement tubulaire, avec un organe de fermeture de soupape (8) disposé de façon mobile dans le corps de soupape, qui est dirigé vers un siège de soupape qui est disposé sur un corps de siège de soupape cylindrique creux (3), assemblé au corps de soupape, qui est installé à une extrémité du corps de soupape, **caractérisé en ce que** le canal transversal (1) est formé par une fente longitudinale, qui s'étend dans le corps de soupape (2) de façon partielle à partir de l'extrémité du corps de soupape (2), dans la direction longitudinale de celui-ci.

2. Ensemble de soupape selon la revendication 1, **caractérisé en ce que** le canal transversal (1) est réalisé en une seule opération en relation avec la formation du corps de soupape (2).

3. Ensemble de soupape selon la revendication 1 ou 2, **caractérisé en ce que** le canal transversal (1) et le corps de soupape (2) sont fabriqués par un procédé de formage à froid.

4. Ensemble de soupape selon l'une quelconque des revendications précédentes, **caractérisé en ce que** plusieurs canaux transversaux (1) sont répartis uniformément sur la périphérie à l'extrémité du corps de soupape (2), l'extrémité du corps de soupape (2) présentant ainsi un contour de couronne à cause des canaux transversaux (1) réalisés en forme de fentes longitudinales.

5. Ensemble de soupape selon l'une quelconque des revendications précédentes, **caractérisé en ce que** le canal transversal (1) est limité directement par le corps de siège de soupape (3) installé de façon étanche au liquide à l'extrémité du corps de soupape (2).

6. Ensemble de soupape selon la revendication 5, **caractérisé en ce que** le corps de siège de soupape (3) est engagé par pression, de façon partielle, dans ou sur l'extrémité du corps de soupape tubulaire (2).

7. Ensemble de soupape selon la revendication 6, **caractérisé en ce que** le corps de siège de soupape (3) présente une butée axiale (4) destinée à limiter la profondeur d'engagement dans ou sur le corps de soupape (2), butée qui prend appui sur la partie de paroi du corps de soupape (2) limitant le/les perçage(s) transversal/transversaux (1).

8. Ensemble de soupape selon l'une quelconque des revendications précédentes, **caractérisé en ce que** le corps de siège de soupape (3) présente, sur le côté situé à l'opposé du corps de soupape (2), une saillie (5) qui est fixée de façon étanche au liquide dans un perçage de réception de soupape (6) au moyen d'un ajustement serré.

9. Ensemble de soupape selon la revendication 8, **caractérisé en ce que** la saillie circulaire (5) présente à sa périphérie extérieure plusieurs stries ou un contour de tourillon en sapin, afin de maximiser l'effet d'étanchéité et de fixation.

10. Ensemble de soupape selon l'une quelconque des revendications précédentes, **caractérisé en ce que** le corps de soupape (2) est fixé dans un corps de réception de soupape (7) au moyen d'un serrage extérieur de la matière du corps limitant le perçage de réception de soupape (6) sous l'action d'une force axiale en direction du corps de siège de soupape (3).
